# EUROPEAN PATENT APPLICATION

(11) **EP 4 365 694 A1**
(43) Date of publication of application: **08.05.2024**
(21) Application number: 22213096.5
(22) Date of filing: 13.12.2022

(54) **INTEGRATED MONITORING METHOD AND SYSTEM FOR OPERATION AREA**

(30) Priority: 01.11.2022 KR 20220143287
(71) Applicant: Defense Agency for Technology and Quality, Jinju-si, Gyeongsangnam-do 52851 (KR)
(72) Inventor: KANG, Hyunjun, Jinju-si, Gyeongsangnam-do 52776 (KR); LEE, Junho, Sancheong-gun, Gyeongsangnam-do 52228 (KR); PARK, Dongsoo, Jinju-si, Gyeongsangnam-do 52853 (KR)
(74) Representative: Eisenführ Speiser

(57) **Abstract**

The present disclosure relates to an integrated monitoring system. The integrated monitoring system includes: a mother ship system which receives operation information, determines a range of an operation area based on the received operation information, and determines the number of unmanned robots movable in the air and underwater for monitoring the operation area based on the determined range of the operation area to form a swarm; a first group of swarm robots, including the determined number of unmanned robots, which collects information on the operation area, and configures a distributed network to perform mutual communication; and a first mobile relay robot which follows a movement path of the first group of swarm robots and is positioned between the mother ship system and the path of the first group of swarm robots to relay data communication between the mother ship system and the first group of swarm robots.

## Description

### CROSS-REFERENCE TO RELATED APPLICATION

This application claims priority under 35 U.S.C §119 to Korean Patent Application No. 10-2022-0143287, filed in the Korean Intellectual Property Office on November 1, 2022, the entire contents of which are hereby incorporated by reference.

### TECHNICAL FIELD

The present disclosure relates to an integrated monitoring method and system for an operation area, and more particularly, to an integrated monitoring method and system for an operation area using swarm unmanned robots.

### BACKGROUND

With the development of advanced information and communication technology, production technology and automation technology, monitoring and reconnaissance systems are being precise and diversified. Accordingly, in modern warfare, it is important to accurately monitor and scout an enemy camp without exposing own position using various devices.

Meanwhile, in general, a monitoring device using a drone is being used to monitor an enemy camp. However, the conventional method has a problem in that a separate member is required to control each drone. In addition, there is a problem that most drone devices cannot operate underwater, and communication may be disconnected when the distance to the drone is large or when the drone operates in underwater.

### SUMMARY

In view of the above, the present disclosure provides an integrated monitoring method and system (apparatus) for an operation area, a computer program stored in a non-transitory computer-readable medium, and a non-transitory computer-readable medium storing the computer program.

The present disclosure may be implemented in a variety of ways, including the method, system (apparatus), computer program stored in the computer-readable medium, or the non-transitory computer readable medium storing the computer program.

In accordance with one embodiment of the present disclosure, an integrated monitoring system for an operation area, comprises: a mother ship system which receives operation information, determines a range of an operation area based on the received operation information, and determines the number of unmanned robots movable in the air and underwater for monitoring the operation area based on the determined range of the operation area to form a swarm; a first group of swarm robots, including the determined number of unmanned robots, which collects information on the operation area, and configures a distributed network to perform mutual communication; and a first mobile relay robot which follows a movement path of the first group of swarm robots and is positioned between the mother ship system and the path of the first group of swarm robots to relay data communication between the mother ship system and the first group of swarm robots.

In accordance with one embodiment of the present disclosure, when a residual battery of at least a part of the unmanned robots included in the first group of swarm robots is equal to or less than a predetermined criterion, the mother ship system transmits a command to return to a mother ship to the first group of swarm robots, and form a second group of swarm robots including the determined number of other unmanned robots.

In accordance with one embodiment of the present disclosure, when receiving the command to return to the mother ship, the first group of swarm robots identifies a usable charging device among a plurality of charging devices installed on the mother ship and perform return driving to dock with the identified charging device.

In accordance with one embodiment of the present disclosure, the integrated monitoring system for an operation area further comprises a second mobile relay robot positioned between the mother ship system and the first mobile relay robot to relay data communication between the first mobile relay robot and the mother ship system, wherein the mother ship system deploys the second mobile relay robot when a communication distance between the first mobile relay robot and the mother ship system is greater than or equal to a predetermined distance.

In accordance with one embodiment of the present disclosure, the mother ship system withdraws the second mobile relay robot when the communication distance between the first mobile relay robot and the mother ship system is less than the predetermined distance.

In accordance with one embodiment of the present disclosure, when among the swarm robots of the first group, a first set of swarm robots are located in the air and a second set of swarm robots are located in the underwater, the mother ship system estimates an absolute position of the first set of swarm robots by using a GPS signal.

In accordance with one embodiment of the present disclosure, the mother ship system estimates a relative position of the second set of swarm robots based on the absolute position of the first set of swarm robots by using the first group of swarm robots that configures the distributed network to perform mutual communication.

In accordance with one embodiment of the present disclosure, the mother ship system receives image information about the operation area collected from the first group of swarm robots, and combines the image information based on a position of each unmanned robot constituting the first group of swarm robots to generate an image map for the operation area.

In accordance with one embodiment of the present disclosure, the mother ship system receives sonar signals and optical signals for the operation area collected from the first group of swarm robots, and provides the sonar signals and the optical signals to a trained artificial neural network to perform object detection.

In accordance with one embodiment of the present disclosure, the mother ship system combines at least one object detected by the artificial neural network with an image map generated based on a position of each unmanned robot constituting the first group of swarm robots.

In accordance with one embodiment of the present disclosure, an integrated monitoring method for an operation area which is performed by at least one processor, comprises: receiving operation information; determining a range of an operation area based on the received operation information; and determining the number of unmanned robots movable in the air and underwater for monitoring the operation area based on the determined range of the operation area to form a first group of swarm robots.

In accordance with one embodiment of the present disclosure, the method further comprises transmitting a command to return to a mother ship to the first group of swarm robots, and forming a second group of swarm robots including the determined number of other unmanned robots, when a residual battery of at least a part of the unmanned robots included in the first group of swarm robots is equal to or less than a predetermined criterion.

In accordance with one embodiment of the present disclosure, the method further comprises performing communications through a first mobile relay robot which follows a movement path of the first group of swarm robots and is positioned between the mother ship system and the path of the first group of swarm robots to relay data communication between the mother ship system and the first group of swarm robots.

In accordance with one embodiment of the present disclosure, the method further comprises deploying a second mobile relay robot when a communication distance between the first mobile relay robot and the mother ship system is greater than or equal to a predetermined distance.

In accordance with one embodiment of the present disclosure, the method further comprises withdrawing the second mobile relay robot when the communication distance between the first mobile relay robot and the mother ship system is less than the predetermined distance.

In accordance with one embodiment of the present disclosure, the method further comprises, when among the swarm robots of the first group, a first set of swarm robots are located in the air and a second set of swarm robots are located in the underwater, estimating an absolute position of the first set of swarm robots by using a GPS signal.

In accordance with one embodiment of the present disclosure, the method further comprises estimating a relative position of the second set of swarm robots based on the absolute position of the first set of swarm robots by using the first group of swarm robots that configures a distributed network to perform mutual communication.

In accordance with one embodiment of the present disclosure, the method further comprises receiving image information about the operation area collected from the first group of swarm robots, and combining the image information based on a position of each unmanned robot constituting the first group of swarm robots to generate an image map for the operation area.

In accordance with one embodiment of the present disclosure, the method further comprises receiving sonar signals and optical signals for the operation area collected from the first group of swarm robots, and providing the sonar signals and the optical signals to a trained artificial neural network to perform object detection.

In accordance with one embodiment of the present disclosure, the method further comprises combining at least one object detected by the artificial neural network with an image map generated based on a position of each unmanned robot constituting the first group of swarm robots.

A non-transitory computer-readable recording medium storing instructions for executing in a computer the above-described method according to one embodiment of the present disclosure is provided.

The effects of the present disclosure are not limited to the effects mentioned above, and other effects not mentioned are clear to those skilled in the art (referred to as "ordinary skilled person") to which the present disclosure pertains from the description of the claims.

### BRIEF DESCRIPTION OF THE DRAWINGS

Embodiments of the present disclosure will be described with reference to the accompanying drawings described below, wherein like reference numbers indicate like elements, but are not limited thereto.
FIG. 1 is a diagram showing an example in which air-underunderwater integrated monitoring is performed for an operation area according to one embodiment of the present disclosure.
FIG. 2 is a diagram illustrating an example in which an additional mobile relay robot is disposed according to one embodiment of the present disclosure.
FIG. 3 is a diagram illustrating an example of estimating positions of a plurality of unmanned robots according to one embodiment of the present disclosure.
FIG. 4 is a block diagram illustrating an example in which a mother ship system generates an image map through information collected from a plurality of unmanned robots according to one embodiment of the present disclosure.
FIG. 5 is a block diagram illustrating an example in which the mother ship system performs object detection through information collected from the plurality of unmanned robots according to one embodiment of the present disclosure.
FIG. 6 is an exemplary view showing an artificial neural network according to one embodiment of the present disclosure.
FIG. 7 is a flowchart illustrating an example of an operation area integrated monitoring method according to one embodiment of the present disclosure.
FIG. 8 is a flowchart illustrating an example of a communication method for the operation area integrated monitoring according to one embodiment of the present disclosure.
FIG. 9 is a block diagram illustrating an internal configuration of a computing device according to one embodiment of the present disclosure.

### DETAILED DESCRIPTION

Hereinafter, specific contents for implementation of the present disclosure will be described in detail with reference to the accompanying drawings. However, in the following description, a detailed description of a well-known configuration or function related to the present disclosure, which may obscure the subject matter of the present disclosure, will be omitted.

In the accompanying drawings, identical or corresponding components are given the same reference numerals. In addition, in the following description of embodiments, redundant descriptions of the identical or corresponding components may be omitted. However, the omission of the description of the components does not intend that the components are not included in the embodiments.

Advantages and features of the disclosed embodiments, and methods for achieving them, will become apparent with reference to the following embodiments in conjunction with the accompanying drawings. However, the present disclosure is not limited to the embodiments disclosed below and may be implemented in various different forms. The embodiments are provided only to complete the present disclosure and to allow those skilled in the art to which the present disclosure pertains to fully understand the scope of the present disclosure.

The terms used in the present specification will be briefly described, and the disclosed embodiments will be described in detail. The terms used in the present specification have been selected from general terms that are currently widely used as much as possible in consideration of the functions in the present disclosure, but these may vary depending on the intentions of engineers engaged in related fields, precedents, the emergence of new technologies, and the like. In addition, in a specific case, there are also terms arbitrarily selected by the inventors, and in this case, the meaning thereof will be described in detail in the corresponding description in the present specification. Accordingly, the term used in the present disclosure should be defined based on the meaning of the term and the overall content of the present disclosure, not a simple name of the term.

In the present specification, the singular expressions include plural expressions unless the context clearly specifies that they are singular. Further, the plural expressions include singular expressions unless the context clearly specifies that they are plural. When it is described that a part includes a component in the present specification, this means that it may further include other components without excluding other components unless otherwise stated.

In the present disclosure, the terms "comprise or include", "comprising or including" and the like may indicate that features, steps, operations, elements and/or components are present, but such terms do not exclude the addition of one or more other functions, steps, operations, elements, components, and/or combinations thereof.

In the present disclosure, when a specific component is referred to as being "coupled", "combined", "connected", or "reactive" to any other component, the specific component is directly coupled to, combined with, and/or connected to another component, or may be reacted therewith, but is not limited thereto. For example, one or more intermediate components may exist between the specific component and another component. Further, in the present disclosure, "and/or" may indicate each of one or more items listed or a combination of at least a part of the one or more items.

In the present disclosure, terms such as "first" and "second" are used to distinguish a specific component from other components, and the above-described components are not limited by such terms. For example, a "first" component may have the same or similar shape as a "second" component.

In the present disclosure, "unmanned robot" may refer to a robot device that is movable in the air and underwater and collects information about an operation area with sensors such as sonar sensors, image sensors, optical sensors, LiDAR, and lasers, and may include, for example, a robot in the form of a bird having wings, but is not limited thereto. When moving from air to underwater, the unmanned robot may fold its wings and move at a high speed, and when moving from underwater to air, it may spray underwater jets or gas to leap and unfold its wings to glide.

In the present disclosure, "swarm control" may include formation control corresponding to physical location arrangement in a 3D space and collaboration control corresponding to mission planning and replanning.

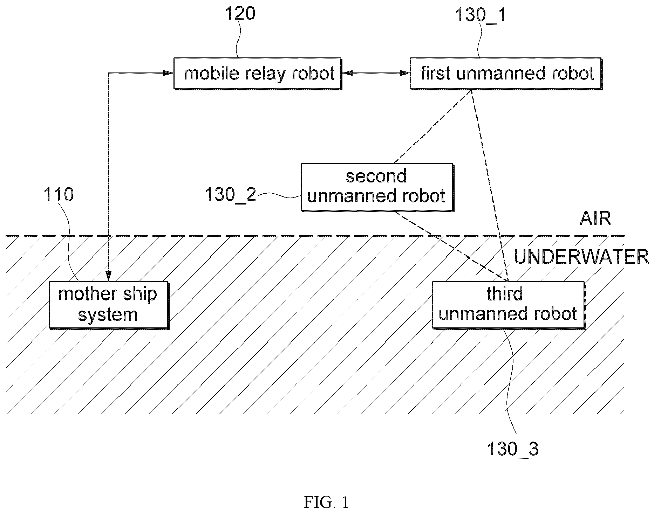

FIG. 1 is a diagram showing an example in which air-underwater integrated monitoring is performed for an operation area according to one embodiment of the present disclosure. As shown, a mother ship system 110 may monitor an operation area using a plurality of unmanned robots 130_1, 130_2, and 130_3 and/or a mobile relay robot 120. Here, the mother ship system 110 may refer to a system of a large command ship (e.g., an underwater ship) that performs control of the unmanned robots and/or a swarm thereof for monitoring the operation area and performs processing and/or management of collected data. In addition, the plurality of unmanned robots 130_1, 130_2, and 130_3 may refer to robot devices that are movable in air and underwater, and collect information about the operation area with sensors such as sonar sensors, image sensors, optical sensors, LIDAR, and lasers, and, for example, may include robots in the form of a bird having wings, but is not limited thereto.

According to one embodiment, the mother ship system 110 is located in a safe area and can perform integrated monitoring of the operation area through the plurality of unmanned robots 130_1, 130_2, and 130_3 without exposing the location of the command ship. For example, the mother ship system 110 may receive operation information and determine a range of the operation area based on the received operation information. In addition, the mother ship system 110 may form a group by determining the number of unmanned robots movable in the air and underwater for monitoring the operation area based on the determined range of the operation area. That is, the mother ship system 110 calculates the number of unmanned robots required to simultaneously monitor the range of the operation area using a predetermined algorithm and/or a machine learning model, and forms swarms each including the calculated number of unmanned robots to perform a control of swarm robots.

When a swarm including the plurality of unmanned robots 130_1, 130_2, and 130_3 is formed, the formed swarm robots may move to the operation area. In this case, some of the unmanned robots constituting the swarm robots may be located in the air, and the remaining may be located in the underwater. In the illustrated example, a swarm including three unmanned robots 130_1, 130_2, and 130_3 may be formed, a first unmanned robot 130_1 and a second unmanned robot 130_2 are located in the air, and a third unmanned robot 130_3 may be located in the underwater, to collect information about the operation area. In this case, the plurality of unmanned robots 130_1, 130_2, and 130_3 may configure a distributed network (e.g., an Ad-Hoc network) to communicate with each other. That is, the plurality of unmanned robots 130_1, 130_2, and 130_3 configure a distributed network to perform optimized communication in an underwater communication environment where communication delays occur.

Additionally, when the first unmanned robot 130_1 and the second unmanned robot 130_2 among the plurality of unmanned robots 130_1, 130_2, and 130_3 are located in the air and the third unmanned robot 130_3 is located in the underwater, the mother ship system 110 and/or the mobile relay robot 120 may have difficulty in direct communication with the third unmanned robot 130_3 located in the underwater. In this case, the information collected by the third unmanned robot 130_3 may configure a distributed network to be transmitted to the first unmanned robot 130_1 and/or the second unmanned robot 130_2 located in the air. The transmitted information may be provided to the mother ship system 110 through the first unmanned robot 130_1 and/or the second unmanned robot 130_2.

According to one embodiment, the mother ship system 110 may communicate with the plurality of unmanned robots 130_1, 130_2, and 130_3 directly or through the mobile relay robot 120. In this case, the mobile relay robot 120 is a robot device that is located between the mother ship system 110 and a path of the swarm robots and relays communication between the mother ship system 110 and the plurality of unmanned robots 130_1, 130_2, and 130_3, and may include, for example, a robot in the form of a drone, but is not limited thereto.

According to one embodiment, the mother ship system 110 may calculate a communication distance between the swarm robots and the command ship, and deploy the mobile relay robot 120 when the communication distance between the swarm robots and the command ship is equal to or greater than a predetermined distance. In this case, the mother ship system 110 may provide a movement path of the swarm robots to the deployed mobile relay robot 120, and the mobile relay robot 120 follows the movement path of the swarm robots to be located between the mother ship system 110 and the path of the swarm robots.

According to one embodiment, when a residual battery of at least a part of the unmanned robots included in the swarm robots is equal to or less than a predetermined first criterion, the mother ship system 110 transmits a command to return to the command ship to the swarm robots, and may form a swarm including the determined number of other unmanned robots to perform a control of the swarm robots. That is, the mother ship system 110 may continuously check the residual batteries of the unmanned robots included in the swarm robots and perform swarm robot control for successful monitoring mission. Additionally or alternatively, the mother ship system 110 may replace only some of the unmanned robots whose residual batteries are equal to or less than the predetermined first criterion with other unmanned robots.

Additionally or alternatively, when the residual battery of at least a part of the unmanned robots included in the swarm robots is equal to or less than a predetermined second criterion (here, the second criterion is smaller than the first criterion), the mother ship system 110 may send a self-destruct command to the corresponding unmanned robot. That is, when it is determined that an unmanned robot cannot return to the command ship due to insufficient battery, the mother ship system 110 may transmit a self-destruct command to the corresponding unmanned robot. In this case, the unmanned robot may recognize an enemy target using various sensors and/or object detection and perform self-destruction on the recognized enemy target.

With such configurations, the mother ship system 110 can effectively monitor the operation area through swarm robots in a safe area without exposing its position to the enemy, and can collect and process information about the operation area in real time operate through the unmanned robots and the mobile relay robot capable of moving in the air and underwater. In FIG. 1, although three unmanned robots 130_1 , 130_2 , and 130_3 are illustrated to form a swarm, the present disclosure is not limited thereto, and the number of unmanned robots forming a swarm may be arbitrarily determined according to the range of the operation area.

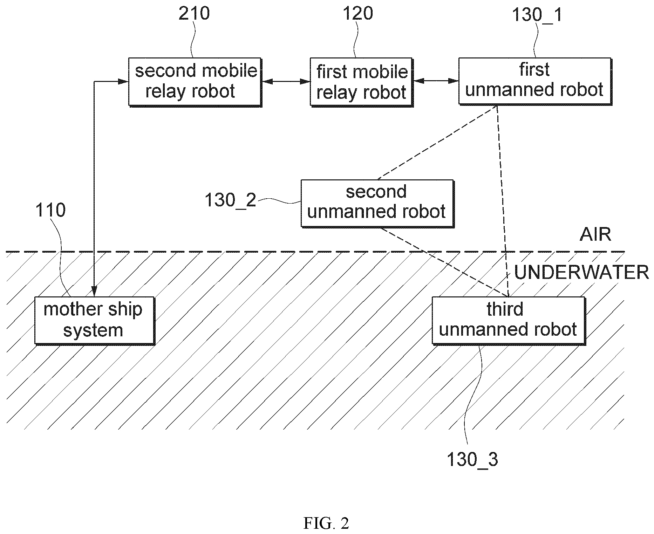

FIG. 2 is a diagram illustrating an example in which an additional mobile relay robot is disposed according to one embodiment of the present disclosure. As described above, the mother ship system 110 may communicate with the plurality of unmanned robots 130_1, 130_2, and 130_3 directly or through the first mobile relay robot 120. For example, when the communication distance between the swarm robots and the command ship is greater than or equal to a predetermined distance, the first mobile relay robot 120 may be deployed to perform communication.

According to one embodiment, when it is difficult to perform communication through one mobile relay robot because the distance between the mother ship system 110 and the plurality of unmanned robots 130_1, 130_2, and 130_3 is large, an additional mobile relay robot may be deployed. In the illustrated example, when it is difficult to perform communication relay through the first mobile relay robot 120, a second mobile relay robot 210 may be additionally disposed between the first mobile relay robot 120 and the mother ship system 110 to perform communications relay.

According to one embodiment, the mother ship system 110 may deploy the second mobile relay robot 210 when the communication distance between the first mobile relay robot 120 and the mother ship system 110 is greater than or equal to a predetermined distance. For example, the first mobile relay robot 120 may follow the moving path of the plurality of unmanned robots 130_1, 130_2, and 130_3 to maintain a communication distance with the plurality of unmanned robots 130_1, 130_2, and 130_3. Then, when the first mobile relay robot 120 is farther away from the mother ship system 110 by the predetermined distance or more, the mother ship system 110 deploys the second mobile relay robot 210 to perform communication.

According to one embodiment, the mother ship system 110 may withdraw the second mobile relay robot 210 when the communication distance between the first mobile relay robot 120 and the mother ship system 110 is less than the predetermined distance. That is, when the plurality of unmanned robots 130_1, 130_2, and 130_3 and the first mobile relay robot 120 move and can communicate directly with the mother ship system 110, the mother ship system 110 may withdraw the second mobile relay robot 210 to conserve resources.

With such configurations, even when the distance between the mother ship system 110 located in a safe area and the swarm robots is long, stable communication can be performed using the plurality of mobile relay robots 120 and 210, and the mother ship system 110 can acquire information about the operation area collected from the swarm robots in real time.

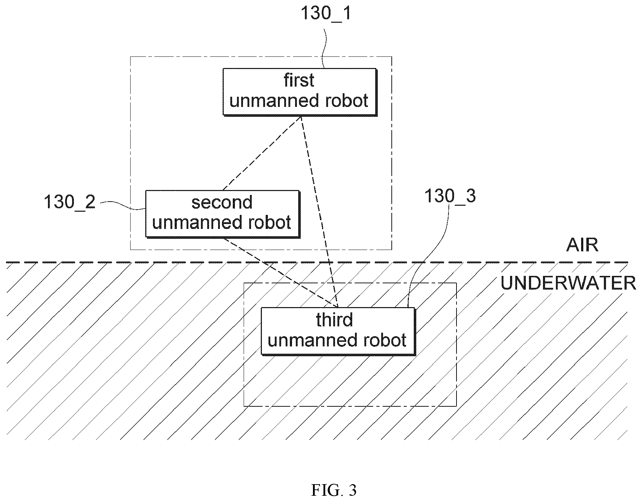

FIG. 3 is a diagram illustrating an example of estimating the positions of the plurality of unmanned robots 130_1, 130_2, and 130_3 according to one embodiment of the present disclosure. According to one embodiment, it is important to precisely estimate the positions of the plurality of unmanned robots 130_1, 130_2, and 130_3 in order to effectively monitor the operation area. However, in general, when an unmanned robot is located in the underwater, it is difficult to estimate its position using a Global Positioning System (GPS) signal or the like.

According to one embodiment, for example, when a first set of swarm robots are located in the air and a second set of swarm robots are located in the underwater, the mother ship system 110 in FIG. 1 may use a GPS signal to estimate an absolute position of the first set of swarm robots. In the illustrated example, the mother ship system may estimate the positions of the first unmanned robot 130_1 and the second unmanned robot 130_2 located in the air using GPS signals.

Then, the mother ship system may estimate a relative position of the second set of swarm robots based on the absolute position of the first set of swarm robots by using the swarm robots that configures a distributed network and performs short-range communication with each other. That is, in the illustrated example, the mother ship system may estimate a relative position of the third unmanned robot 130_3 located in the underwater based on the estimated positions of the first unmanned robot 130_1 and the second unmanned robot 130_2. In other words, when short-range communication is performed by configuring a distributed network between unmanned robots, relative position estimation may be possible. Accordingly, when some unmanned robots forming a swarm are located in the air, a relative position of unmanned robot located in the underwater can be estimated based on the absolute positions of the unmanned robots in the air.

With such configurations, by precisely estimating the positions of unmanned robots located in the underwater, the mother ship system can efficiently process and/or treat information collected based on the position information of the unmanned robots.

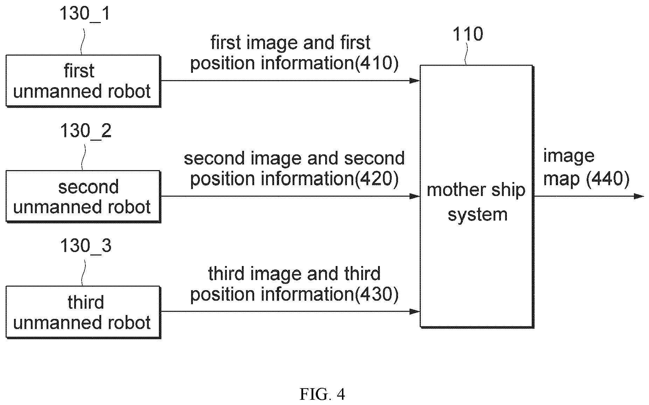

FIG. 4 is a block diagram illustrating an example in which the mother ship system 110 generates an image map 440 through information collected from the plurality of unmanned robots 130_1, 130_2, and 130_3 according to one embodiment of the present disclosure. As described above, the plurality of unmanned robots 130_1, 130_2, and 130_3 may collect information about the operation area using various sensors. In addition, the collected operation area information and/or position information of the plurality of unmanned robots 130_1, 130_2, and 130_3 may be provided to the mother ship system 110.

According to one embodiment, the mother ship system 110 receives image information about the operation area collected from the swarm robots, and combines the image information based on the position of each unmanned robot constituting the swarm robots to generate an image map for the operation area. That is, the mother ship system 110 may generate one image map 440 representing the operation area using images (e.g., 2D images, 3D images, 3D cloud points, etc.) collected from each unmanned robot. For example, the mother ship system 110 receives a first image and first position information 410 from the first unmanned robot 130_1, and receives a second image and second position information 420 from the second unmanned robot 130_2, and a third image and third position information 430 from the third unmanned robot 130_3 to generate an image map 440.

In other words, the mother ship system 110 may determine the combined positions of the received first image, second image, and third image based on the absolute and relative positions of the plurality of unmanned robots 130_1, 130_2, and 130_3. Then, the mother ship system 110 may acquire an image map (e.g., 2D image, 3D image, and/or panoramic image) 440 combined according to the positions.

In FIG. 4, the mother ship system 110 is illustrated as receiving information on the operation area from three unmanned robots 130_1, 130_2, and 130_3, but the present disclosure is not limited thereto. The mother ship system 110 may receive information about the operation area from an arbitrary number of unmanned robots forming a swarm. With such configurations, the mother ship system 110 does not simply use the information on the operation area collected from each unmanned robot, but generates one image map 440, so that an operation commander can confirm the operation area at a glance easily and conduct effective monitoring of the operation area.

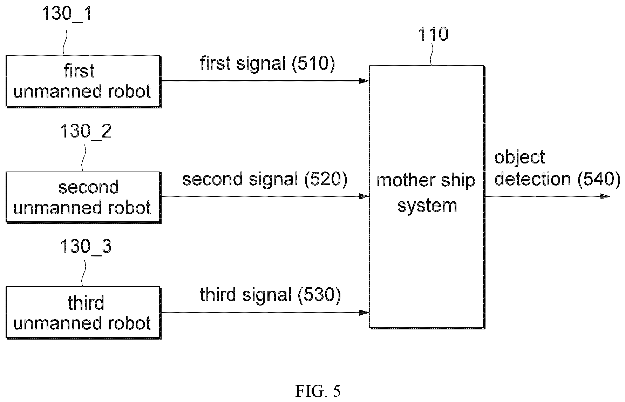

FIG. 5 is a block diagram illustrating an example in which the mother ship system 110 performs object detection through information collected from the plurality of unmanned robots 130_1, 130_2, and 130_3 according to one embodiment of the present disclosure. As described above, the plurality of unmanned robots 130_1, 130_2, and 130_3 may collect information about the operation area using various sensors. In addition, the collected information on the operation area and/or various signals may be provided to the mother ship system 110.

According to one embodiment, the mother ship system 110 may receive sonar signals and optical signals for the operation area collected from the swarm robots, and provide the sonar signals and the optical signals to the trained artificial neural network to perform object detection. For example, the mother ship system 110 may receive a first signal 510 from the first unmanned robot 130_1, a second signal 520 from the second unmanned robot 130_2, and a third signal 530 from the third unmanned robot 130_3 to perform object detection 540. When the object detection is performed, information about the name, type, and/or size of the detected object may be extracted. In this case, the mother ship system 110 may augment and use the received low-density signals 510, 520, and 530 as low-density signals 510, 520, and 530 using an arbitrary algorithm and/or machine learning model, rather than using them as they are.

Additionally or alternatively, the mother ship system 110 may combine at least one object detected by the artificial neural network with an image map generated based on the position of each of the unmanned robots 130_1, 130_2, and 130_3 constituting the swarm robots. That is, the mother ship system 110 may generate a virtual image reproducing the operation area based on the information collected by the plurality of unmanned robots 130_1, 130_2, and 130_3.

In FIG. 5 , the mother ship system 110 is illustrated as receiving information on the operation area from three unmanned robots 130_1, 130_2, and 130_3, but the present disclosure is not limited thereto. The mother ship system 110 may receive information about the operation area from an arbitrary number of unmanned robots forming a swarm. With such configurations, the mother ship system 110 may visualize and provide information on enemy targets and the like in the operation area by combining surrounding objects with the operation area, not simply the shape of the operation area.

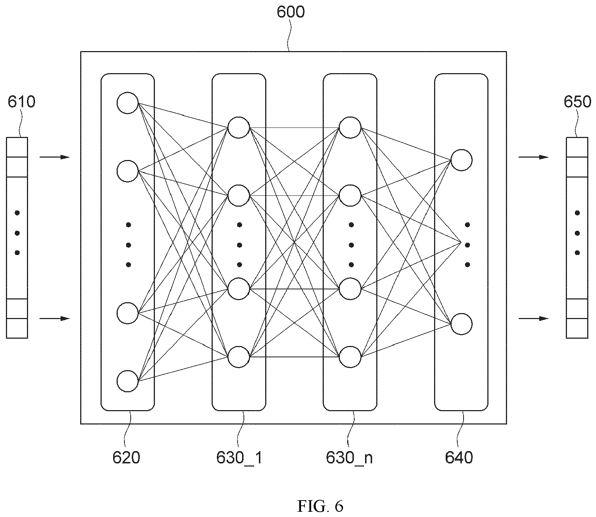

FIG. 6 is an exemplary view showing an artificial neural network 600 according to one embodiment of the present disclosure. The artificial neural network (or artificial neural network model) 600, as an example of a machine learning model, is a statistical learning algorithm implemented based on the structure of a biological neural network, or a structure for executing the algorithm, in machine learning technology and cognitive science.

According to one embodiment, the artificial neural network 600 may represent a machine learning model having problem-solving ability in which nodes as artificial neurons that form a network by combining synapses as in a biological neural network, repeatedly adjust synaptic weights to learn to reduce the error between a correct output corresponding to a specific input and an inferred output. For example, the artificial neural network 600 may include an arbitrary language model used for artificial intelligence learning methods such as machine learning and deep learning.

According to one embodiment, the artificial neural network 600 may be implemented as a multilayer perceptron (MLP) including multilayer nodes and connections between them. The artificial neural network 600 according to the present embodiment may be implemented using one of various artificial neural network model structures including the MLP. As shown in FIG. 6, the artificial neural network 600 includes an input layer 620 which receives an input signal or data 610 from the outside, an output layer 640 which outputs an output signal or data 650 corresponding to the input data 610, and n (n being a positive integer) hidden layers 630_1 to 630_n, located between the input layer 620 and the output layer 640, which receive signals from the input layer 620, extract characteristics, and transfers them to the output layer 640. The output layer 640 receives signals from the hidden layers 630_1 to 630_n and outputs them to the outside.

The learning method of the artificial neural network 600 includes a supervised learning method of learning to be optimized for problem solving through an input of a teacher signal (correct answer), and an unsupervised learning method requiring no teacher signal. According to one embodiment, the artificial neural network 600 may be trained to perform object detection by receiving sonar signals and optical signals in order to recognize objects by processing numerous signals in near real time in the mother ship system. In this case, the object detected by the artificial neural network 600 may be combined with an image map and used for integrated monitoring of the operation area.

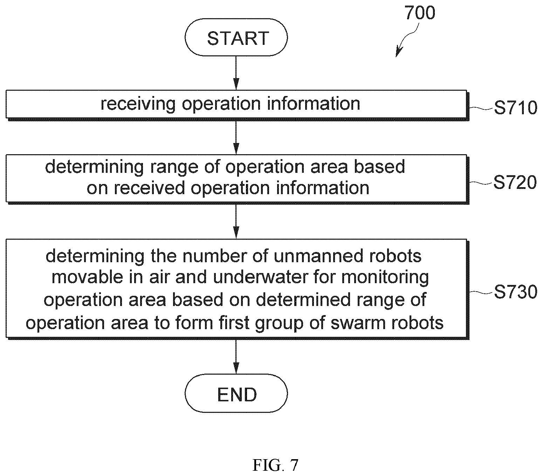

FIG. 7 is a flowchart illustrating an example of an integrated monitoring method 700 for an operation area according to one embodiment of the present disclosure. The operation area integrated monitoring method 700 may be performed by at least one processor (e.g., at least one processor of a computing device associated with the mother ship system). The operation area integrated monitoring method 700 may be initiated when the processor receives operation information (S710).

The processor may determine a range of the operation area based on the received operation information (S720). Then, the processor may determine the number of unmanned robots capable of moving in the air and underwater for monitoring the operation area based on the determined range of the operation area to form a first group of swarm robots (S730). In this case, the formed swarm robots may communicate with each other by configuring a distributed network.

According to omen embodiment, the processor may perform communications through the first mobile relay robot that follows the movement path of the first group of swarm robots and is positioned between the mother ship system and the path of the first group of swarm robots to relay data communication between the mother ship system and the first group of swarm robots.

When the residual battery of at least one of the unmanned robots included in the first group of swarm robots is equal to or less than a predetermined criterion, the processor may transmit a command to return to the command ship to the first group of swarm robots, and form a second group of swarm robots including the determined number of other unmanned robots. That is, the processor may call the first group of swarm robots to the command ship and deploy the second group of swarm robots to the operation area.

When among the first group of swarm robots, a first set of swarm robots are located in the air and a second set of swarm robots are located in the underwater, the processor may estimate an absolute position of the first set of swarm robots by using a GPS signal. In addition, the processor may estimate a relative position of the second set of swarm robots based on the absolute position of the first set of swarm robots, using the first group of swarm robots that configure a distributed network and communicate with each other.

The processor may receive image information about the operation area collected from the first group of swarm robots, and combine the image information based on the position of each unmanned robot constituting the first group of swarm robots to generate an image map for the operation area. In addition, the processor may receive sonar signals and optical signals for the operation area collected from the first group of swarm robots, and provide the sonar signals and the optical signals to the trained artificial neural network to perform object detection. In this case, the processor may combine at least one object detected by the artificial neural network with the image map generated based on the position of each unmanned robot constituting the first group of swarm robots.

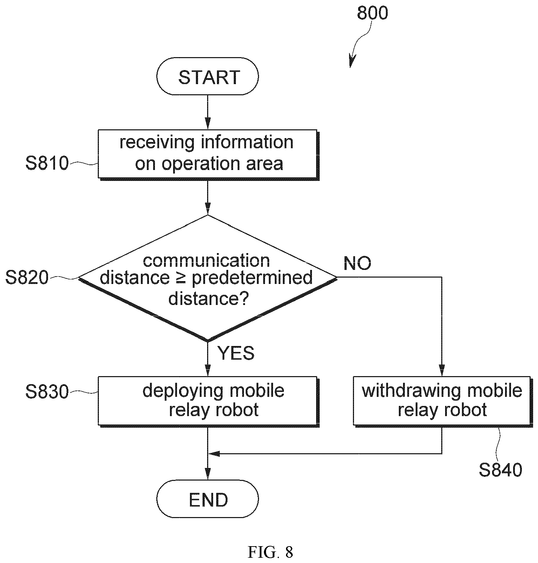

FIG. 8 is a flowchart illustrating an example of a communication method 800 for integrated monitoring of an operation area according to one embodiment of the present disclosure. The communication method 800 for integrated monitoring of the operation area may be performed by at least one processor (e.g., at least one processor of a computing device associated with the mother ship system). The communication method 800 for integrated monitoring of the operation area may be initiated when the processor receives information on the operation area (S810). The processor may perform communications through the first mobile relay robot that follows the movement path of the first group of swarm robots and is located between the mother ship system and the path of the first group of swarm robots to relay data communication between the mother ship system and the first group of swarm robots. In this case, the processor may receive information about the operation area from the first group of swarm robots.

The processor may determine whether a communication distance between the swarm robots and/or the mobile relay robot and the mother ship system is greater than or equal to a predetermined distance (S820). For example, when the communication distance between the swarm robots and the mother ship system is greater than or equal to the predetermined distance, the processor may deploy the mobile relay robot to perform communication (S830). In another example, when the communication distance between the previously deployed mobile relay robot and the mother ship system is greater than or equal to the predetermined distance, the processor may deploy another mobile relay robot to perform communication. Additionally or alternatively, when the communication distance between the swarm robots and the mother ship system is less than the predetermined distance, the processor may withdraw the mobile relay robot and perform communication through the swarm robots and/or another mobile relay robot (S840).

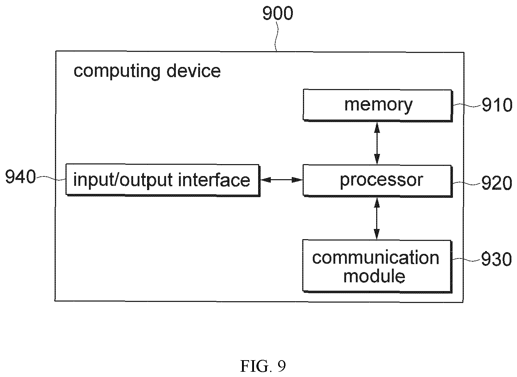

FIG. 9 is a block diagram showing an internal configuration of a computing device 900 according to one embodiment of the present disclosure. According to one embodiment, the computing device 900 may include a memory 910, a processor 920, a communication module 930, and an input/output interface 940. As shown in FIG. 9, the computing device 900 may be configured to perform information and/or data communications through a network using a communication module 930.

The memory 910 may include any non-transitory computer-readable recording medium. According to one embodiment, the memory 910 is a permanent mass storage device such as random access memory (RAM), read only memory (ROM), disk drive, solid state drive (SSD), flash memory, and the like. As another example, the permanent mass storage device such as the ROM, SSD, flash memory, or disk drive may be included in the computing device 900 as a separate permanent storage device different from memory. Further, an operating system and at least one program code may be stored in the memory 910.

These software components may be loaded from a computer-readable recording medium separate from the memory 910. The separate computer-readable recording medium may include a recording medium directly connectable to the computing device 900, such as a floppy drive, a disk, a tape, a DVD/CD-ROM drive, a memory card, and the like, for example. As another example, the software components may be loaded into the memory 910 through the communication module 930 rather than the computer-readable recording medium. For example, at least one program may be loaded into the memory 910 based on a computer program installed by files provided by developers or a file distribution system that distributes application installation files through the communication module 930.

The processor 920 may be configured to process commands of a computer program by performing basic arithmetic, logic, and input/output operations. The commands may be provided to a user terminal (not shown) or another external system through the memory 910 or the communication module 930.

The communication module 930 may provide a configuration or function for the user terminal (not shown) and the computing device 900 to communicate with each other through a network, and the computing device 900 may provide a configuration or function to communicate with an external system (for example, a separate cloud system etc.). For example, control signals, commands, data, etc. provided under the control of the processor 920 of the computing device 900 may be transmitted through the communication module 930 and the network to the user terminal and/or the external system via communication modules of the user terminal and the external system.

Further, the input/output interface 940 of the computing device 900 may be a means for interface with a device (not shown) for input or output that may be connected to the computing device 900 or may be included in the computing device 900. In FIG. 9, the input/output interface 940 is illustrated as an element separately configured from the processor 920, but is not limited thereto, and the input/output interface 940 may be included in the processor 920. The computing device 900 may include more components other than those of FIG. 9. However, there is no need to clearly show most of the conventional components.

The processor 920 of the computing device 900 may be configured to manage, process, and/or store information and/or data received from a plurality of user terminals and/or a plurality of external systems.

The above-described methods and/or various embodiments may be realized with digital electronic circuits, computer hardware, firmware, software, and/or combinations thereof. Various embodiments of the present disclosure may be implemented by a data processing device, e.g., one or more programmable processors and/or one or more computing devices, or as a computer-readable recording medium and/or a computer program stored on the computer-readable recording medium. The above-described computer programs may be written in any form of programming language, including compiled or interpreted languages, and may be distributed in any form, such as a stand-alone program, module, or subroutine. The computer program may be distributed through one computing device, a plurality of computing devices connected through the same network, and/or a plurality of computing devices distributed and connected through a plurality of different networks.

The above-described methods and/or various embodiments may be performed by one or more processors configured to execute one or more computer programs that process, store, and/or manage any function, algorithm, or the like, by operating or generating output data based on input data. For example, the method and/or various embodiments of the present disclosure may be performed by a special purpose logic circuit such as a Field Programmable Gate Array (FPGA) or an Application Specific Integrated Circuit (ASIC), and apparatuses and/or systems for performing the method and/or various embodiments of the present disclosure may be implemented as special purpose logic circuits such as FPGAs or ASICs.

The one or more processors executing the computer program may include a general purpose or special purpose microprocessor and/or any kind of one or more processors of digital computing device. The processor may receive instructions and/or data from each of the read-only memory and the random access memory, or receive instructions and/or data from the read-only memory and the random access memory. In the present disclosure, components of a computing device performing the methods and/or embodiments may include one or more processors for executing instructions, and one or more memory devices for storing instructions and/or data.

According to one embodiment, the computing device may exchange data with one or more mass storage devices for storing data. For example, the computing device may receive data from a magnetic or optical disc and/or transfer data to the magnetic or optical disc. A computer-readable storage medium suitable for storing instructions and/or data associated with a computer program may include any type of non-volatile memory including semiconductor memory devices such as Erasable Programmable Read-Only Memory (EPROM), Electrically Erasable PROM (EEPROM), and flash memory devices, but is not limited thereto. For example, the computer-readable storage medium may include magnetic disks such as internal hard disks or removable disks, magneto-optical disks, CD-ROM and DVD-ROM disks.

In order to provide interaction with a user, the computing device may include a display device (e.g., a cathode ray tube (CRT), a liquid crystal display (LCD), etc.) which provides information to the user or display information, and a pointing device (e.g., a keyboard, a mouse, a trackball, etc.) through which the user can input and/or provide commands to the computing device, but is not limited thereto. That is, the computing device may further include any other type of device for providing interaction with a user. For example, the computing device may provide any type of sensory feedback, including visual feedback, auditory feedback, and/or tactile feedback, to a user for interaction with the user. In this regard, the user may provide input to the computing device through various gestures such as visual gesture, voice, and motion.

In the present disclosure, various embodiments may be implemented in a computing system including a back-end component (e.g., a data server), a middleware component (e.g., an application server), and/or a front-end component. In this case, the components may be interconnected by any form or medium of digital data communication, such as a communication network. For example, the communication network may include a local area network (LAN), a wide area network (WAN), and the like.

The computing device based on the example embodiments described herein may be implemented using hardware and/or software configured to interact with a user, including a user device, a user interface (UI) device, a user terminal, or a client device. For example, the computing device may include a portable computing device such as a laptop computer. Additionally or alternatively, the computing device may include personal digital assistants (PDAs), tablet PCs, game consoles, wearable devices, internet of things (IoT) devices, virtual reality (VR) devices, AR (augmented reality) device, etc., but is not limited thereto. The computing device may further include other types of devices configured to interact with a user. Further, the computing device may include a portable communication device (e.g., a mobile phone, a smartphone, a wireless cellular phone, etc.) suitable for wireless communication through a network such as a mobile communication network. The computing device may be configured to communicate with a network server wirelessly using wireless communication technologies and/or protocols such as radio frequency (RF), microwave frequency (MWF), and/or infrared ray frequency (IRF).

The above-described various embodiments, including specific structural and functional details, are exemplary. Accordingly, the embodiments of the present disclosure are not limited to those described above and may be implemented in various other forms. In addition, the terms used in the present disclosure are for describing some embodiments and are not construed as limiting the embodiments. For example, the singular may be construed to include the plural as well, unless the context clearly describes otherwise.

In the present disclosure, unless defined otherwise, all terms used in this specification, including technical or scientific terms, have the same meaning as commonly understood by a person of ordinary skill in the art to which such concept belongs. In addition, terms commonly used, such as terms defined in a dictionary, should be interpreted as having a meaning consistent with the meaning in the context of the related art.

Although the present disclosure has been described in relation to some embodiments in this specification, various modifications and changes may be made without departing from the scope of the present disclosure that can be understood by those skilled in the art. Moreover, such modifications and changes are intended to fall within the scope of the claims appended hereto.

## Claims

1. An integrated monitoring system for an operation area, the system comprising:
a mother ship system which receives operation information, determines a range of an operation area based on the received operation information, and determines the number of unmanned robots movable in the air and underwater for monitoring the operation area based on the determined range of the operation area to form a swarm;
a first group of swarm robots, including the determined number of unmanned robots, which collects information on the operation area, and configures a distributed network to perform mutual communication; and
a first mobile relay robot which follows a movement path of the first group of swarm robots and is positioned between the mother ship system and the path of the first group of swarm robots to relay data communication between the mother ship system and the first group of swarm robots.

2. The system of claim 1, wherein when a residual battery of at least a part of the unmanned robots included in the first group of swarm robots is equal to or less than a predetermined criterion, the mother ship system transmits a command to return to a mother ship to the first group of swarm robots, and form a second group of swarm robots including the determined number of other unmanned robots.

3. The system of claim 2, wherein when receiving the command to return to the mother ship, the first group of swarm robots identifies a usable charging device among a plurality of charging devices installed on the mother ship and perform return driving to dock with the identified charging device.

4. The system of claim 1, further comprising:
a second mobile relay robot positioned between the mother ship system and the first mobile relay robot to relay data communication between the first mobile relay robot and the mother ship system,
wherein the mother ship system deploys the second mobile relay robot when a communication distance between the first mobile relay robot and the mother ship system is greater than or equal to a predetermined distance.

5. The system of claim 4, wherein the mother ship system withdraws the second mobile relay robot when the communication distance between the first mobile relay robot and the mother ship system is less than the predetermined distance.

6. The system of claim 1, wherein when among the swarm robots of the first group, a first set of swarm robots are located in the air and a second set of swarm robots are located in the underwater, the mother ship system estimates an absolute position of the first set of swarm robots by using a GPS signal.

7. The system of claim 6, wherein the mother ship system estimates a relative position of the second set of swarm robots based on the absolute position of the first set of swarm robots by using the first group of swarm robots that configures the distributed network to perform mutual communication.

8. The system of claim 1, wherein the mother ship system receives image information about the operation area collected from the first group of swarm robots, and combines the image information based on a position of each unmanned robot constituting the first group of swarm robots to generate an image map for the operation area.

9. The system of claim 1, wherein the mother ship system receives sonar signals and optical signals for the operation area collected from the first group of swarm robots, and provides the sonar signals and the optical signals to a trained artificial neural network to perform object detection.

10. The system of claim 9, wherein the mother ship system combines at least one object detected by the artificial neural network with an image map generated based on a position of each unmanned robot constituting the first group of swarm robots.

11. An integrated monitoring method for an operation area which is performed by at least one processor, the method comprising:
receiving operation information;
determining a range of an operation area based on the received operation information; and
determining the number of unmanned robots movable in the air and underwater for monitoring the operation area based on the determined range of the operation area to form a first group of swarm robots.

12. The method of claim 11, further comprising:
when a residual battery of at least a part of the unmanned robots included in the first group of swarm robots is equal to or less than a predetermined criterion, transmitting a command to return to a mother ship to the first group of swarm robots, and forming a second group of swarm robots including the determined number of other unmanned robots.

13. The method of claim 11, further comprising:
performing communications through a first mobile relay robot which follows a movement path of the first group of swarm robots and is positioned between the mother ship system and the path of the first group of swarm robots to relay data communication between the mother ship system and the first group of swarm robots.

14. The method of claim 11, further comprising:
when among the swarm robots of the first group, a first set of swarm robots are located in the air and a second set of swarm robots are located in the underwater, estimating an absolute position of the first set of swarm robots by using a GPS signal.

15. The method of claim 14, further comprising:
estimating a relative position of the second set of swarm robots based on the absolute position of the first set of swarm robots by using the first group of swarm robots that configures a distributed network to perform mutual communication.
